# EUROPEAN PATENT APPLICATION

(11) **EP 2 479 656 A1**
(43) Date of publication of application: **25.07.2012**
(21) Application number: 10814976.6
(22) Date of filing: 06.09.2010
(51) Int. Cl.: G06F 3/048

(54) **METHOD, EQUIPMENT AND SYSTEM FOR INPUTTING CHARACTERS**

(30) Priority: 14.09.2009 CN 200910176408
(71) Applicant: Huawei Device Co., Ltd., Shenzhen, Guangdong 518129 (CN)
(72) Inventor: XIA, Nan, Shenzhen Guangdong 518129 (CN)
(74) Representative: Isarpatent
(86) International application number: PCT/CN2010/076637
(87) International publication number: WO 2011/029374

(57) **Abstract**

Embodiments of the present invention disclose a character input method, device and system, which relate to the field of remote control technologies and the field of communications technologies, and solve the problem of low efficiency during character input through a remote control device in the prior art. According to the embodiment of the present invention, a soft keyboard is enabled, where the soft keyboard is divided into at least two subareas by using different marks, and each subarea has a focus; a confirmation signal is received; and a character indicated by the corresponding focus according to the received confirmation signal is input. The embodiments of the present invention are mainly applicable to the scenario of character input.

## Description

This application claims priority to Chinese Patent Application No. 200910176408.3, filed with the Chinese Patent Office on September 14, 2009 and entitled "CHARACTER INPUT METHOD, DEVICE AND SYSTEM", the contents of which are all incorporated herein by reference in their entireties.

### FIELD OF THE INVENTION

The present invention relates to the field of remote control technologies and the field of communications technologies, and in particular, to a character input method, device and system.

### BACKGROUND OF THE INVENTION

Remote controllers are widely used in apparatuses such as a set top box and a video conference terminal for remote control. A user may input characters such as text, numbers and symbols into any one of the apparatuses by using a remote controller, so as to facilitate man-machine interaction with the apparatus. The conventional input method mainly includes two types as follows.
1. Input is performed by using 0-9 number keys of a remote controller and an input method switch function key in a certain coding mode. The specific method is as follows.

Chinese Pinyin: Chinese input with Pinyin prediction is provided by using 0-9 number keys plus several function control keys in a single-tap mode.

English capitals and small letters: English letters and English words, including capitals and small letters, are edited in a multi-tap mode.

Number input: Numbers are input in a single-tap mode.

Punctuation symbols: Common full-width and half-width punctuations and special symbols are invoked by one tap.

Input status switch: In a text editing process, Chinese Pinyin, Smart English, English capitals and small letters and number input statuses are switched when necessary.
2. Input is performed by using a soft keyboard.

A soft keyboard including characters such as all letters and numbers is displayed on a screen and a focus cursor is moved on the soft keyboard by using navigation keys of a remote controller, so as to input characters such as letters or numbers.

During the implementation of the embodiments of the present invention, the inventor finds that the prior art at least has the following technical problems: In the first method, 10 number keys of 0 to 9 in total need to be disposed on the remote controller, and it is very difficult to remove the 10 keys in the miniaturization trend of the remote controller. When letters and Pinyin are input, a desired character can be found only by tapping one number key several times. People with experience in this aspect know that this process is very slow and hard to control, so the input speed is relatively low. In the second input method, a focus cursor needs to be moved on the soft keyboard for input, so the number of times of moving the focus cursor is related to the arrangement mode of the keyboard and the number of keys. Usually, for a soft keyboard with 36 keys, in average the focus cursor needs to be moved 7-8 times to input one character. Therefore, it is also difficult to increase the input speed. It can be seen from the above two conventional character input methods that, no matter which method is used, the problems of redundant operations and low input speed during character input exist.

### SUMMARY OF THE INVENTION

In view of this, the embodiments of the present invention provide a character input method, device and system, so as to improve the character input efficiency.

In order to achieve the objective, the embodiments of the present invention use the following technical solutions.

A character input method includes:
enabling a soft keyboard, where the soft keyboard is divided into at least two subareas by using different marks, and each subarea has a focus;
receiving a confirmation signal; and
inputting a character indicated by the corresponding focus according to the received confirmation signal.

An input device includes:
an enabling module, configured to enable a soft keyboard, where the soft keyboard is divided into at least two subareas by using different marks, and each subarea has a focus;
a confirmation receiving module, configured to receive a confirmation signal; and
an input module, configured to input a character indicated by the corresponding focus according to the confirmation signal received by the confirmation receiving module.

A control device includes: at least two confirmation sending modules, wherein
each of the at least two confirmation sending modules is configured to send a confirmation signal, and the confirmation signal corresponds to a subarea on a soft keyboard; and
the confirmation signals sent by different confirmation sending modules respectively correspond to different subareas on the soft keyboard.

A character input system includes:
a soft keyboard, configured to enable a soft keyboard, where the soft keyboard is divided into at least two subareas by using different marks, and each subarea has a focus; and after receiving a confirmation signal, input a character indicated by the corresponding focus according to the received confirmation signal; and
a control device, configured to send at least two confirmation signals, where any one of the confirmation signals corresponds to a subarea on the soft keyboard, and different confirmation signals respectively correspond to different subareas on the soft keyboard.

The technical solutions provided in the embodiments of the present invention have the following beneficial effects. Through the technical solution where the soft keyboard is divided into subareas by using different marks, and each subarea has a focus, the technical problems of redundant operations and low speed during character input caused by only one focus in the prior art are solved, thereby achieving the technical effect of positioning multiple characters at one time and improving the character input efficiency.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art may derive other drawings according to these accompanying drawings without creative efforts.
FIG. 1 is a schematic flow chart of a character input method according to Embodiment 1 of the present invention;
FIG. 2 is a schematic diagram of a first soft keyboard according to Embodiment 2 of the present invention;
FIG. 3 is a schematic diagram of a remote controller according to Embodiment 2 of the present invention;
FIG. 4 is a schematic flow chart of a character input method according to Embodiment 2 of the present invention;
FIG. 5 is a schematic diagram of a second soft keyboard according to Embodiment 2 of the present invention;
FIG. 6 is a schematic diagram of a third soft keyboard according to Embodiment 2 of the present invention;
FIG. 7 is a schematic diagram of indication information displayed when a function keyboard is switched according to Embodiment 2 of the present invention;
FIG. 8 is a schematic structure diagram of a first input device according to Embodiment 4 of the present invention;
FIG. 9 is a schematic structure diagram of a second input device according to Embodiment 4 of the present invention;
FIG. 10 is a schematic structure diagram of a third input device according to Embodiment 4 of the present invention;
FIG. 11 is a schematic structure diagram of a first control device according to Embodiment 4 of the present invention;
FIG. 12 is a schematic structure diagram of a second control device according to Embodiment 4 of the present invention;
FIG. 13 is a schematic structure diagram of a third control device according to Embodiment 4 of the present invention;
FIG. 14 is a schematic structure diagram of a character input system according to Embodiment 5 of the present invention;
FIG. 15 is a schematic diagram of a remote controller according to Embodiment 3 of the present invention; and
FIG. 16 is a schematic flow chart of a character input method according to Embodiment 3 of the present invention.

### DETAILED DESCRIPTION OF THE EMBODIMENTS

The technical solutions in the embodiments of the present invention will be clearly and fully described in the following with reference to the accompanying drawings. Apparently, the embodiments to be described are only a part rather than all of the embodiments of the present invention. All other embodiments obtained by persons of ordinary skill in the art based on the embodiments of the present invention without creative efforts shall fall within the protection scope of the present invention. Moreover, the following embodiments are all optional solutions of the present invention, and the arrangement sequence and serial numbers of the embodiments are irrelevant to a preferred execution order thereof.

### Embodiment 1

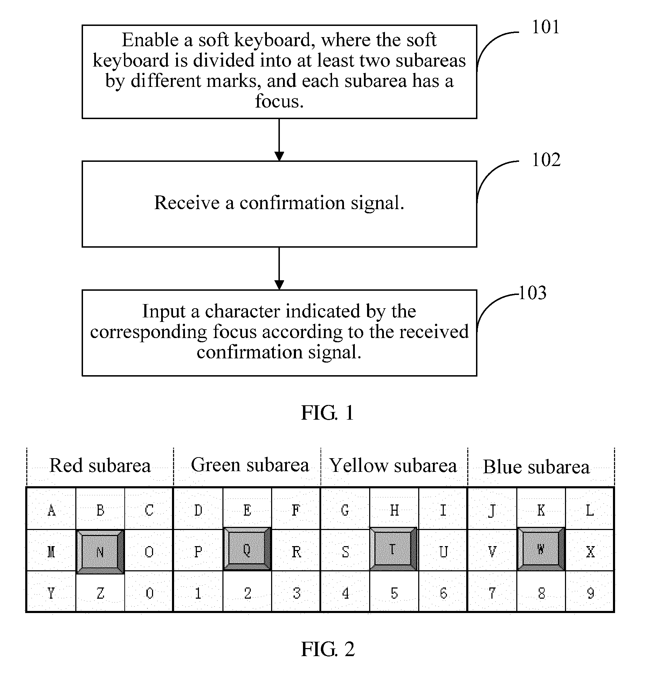

An embodiment provides a character input method. As shown in FIG. 1, the method includes the following.

Step 101: Enable a soft keyboard, where the soft keyboard is divided into at least two subareas by using different marks, and each subarea has a focus.

In this embodiment, the focus may be a cursor, may also be an indication region where a character is highlighted, and may even be any display form that indicates which character a user currently selects.

Step 102: Receive a confirmation signal.

Step 103: Input a character indicated by the corresponding focus according to the received confirmation signal.

Compared with the prior art where only one focus is used for positioning a character on the soft keyboard, in the embodiment of the present invention, the soft keyboard has at least two focuses to enable a user to position multiple characters at one time, thereby reducing the number of times the user moves the focus, increasing the speed of positioning a character when the user inputs characters, and improving the input efficiency.

### Embodiment 2

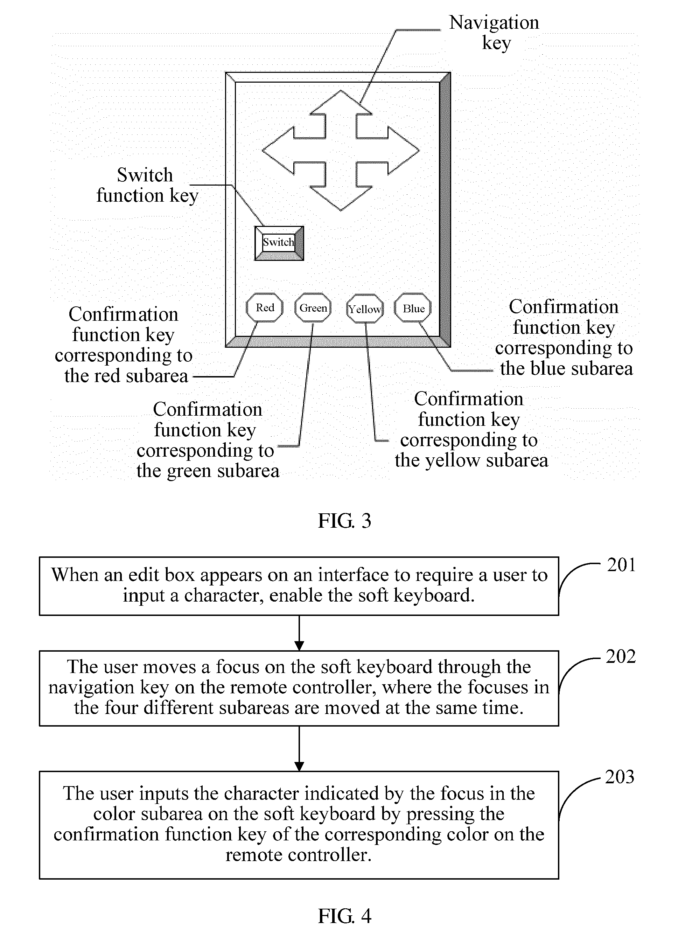

Embodiment 2 specifically provides a character input method. The method according to the embodiment involves a soft keyboard and a remote controller. FIG. 2 shows a soft keyboard in the embodiment. The soft keyboard is divided into four subareas by using four different colors: red, green, yellow and blue. Each subarea includes a focus. FIG. 3 shows a remote controller in the embodiment. The remote controller includes: navigation keys of moving up, down, left and right for sending navigation signals; a switch function key for sending a switch signal; and four confirmation function keys of red, green, yellow and blue respectively corresponding to the four subareas on the soft keyboard for sending confirmation signals respectively corresponding to the four subareas to input characters selected by a user in the corresponding subareas.

As shown in FIG. 4, the method includes the following.

Step 201: When an edit box appears on an interface to require a user to input a character, enable the soft keyboard shown in FIG. 2.

Step 202: The user moves a focus on the soft keyboard through the navigation key on the remote controller, where the focuses in the four different subareas are moved at the same time.

For example, in the soft keyboard shown in FIG. 2, when the user presses the navigation key of moving left, the focus in the red subarea indicates "M"; the focus in the green subarea indicates "P"; the focus in the yellow subarea indicates "S"; and the focus in the blue subarea indicates "V".

Step 203: When any focus on the soft keyboard is moved to the character to be input, the user inputs the character indicated by the focus in the color subarea on the soft keyboard by pressing the confirmation function key of the corresponding color on the remote controller.

For example, in the soft keyboard shown in FIG. 2, currently the focuses of the four subareas respectively indicate letters "N", "Q", "T" and "S". If the user wants to input the character "N", the user presses the red confirmation function key on the remote controller to input "N" indicated by the focus in the red subarea.

In addition, in the embodiment, according to the included character types, soft keyboards are divided into three types, which are respectively the soft keyboards shown in FIG. 2, FIG. 5 and FIG. 6.

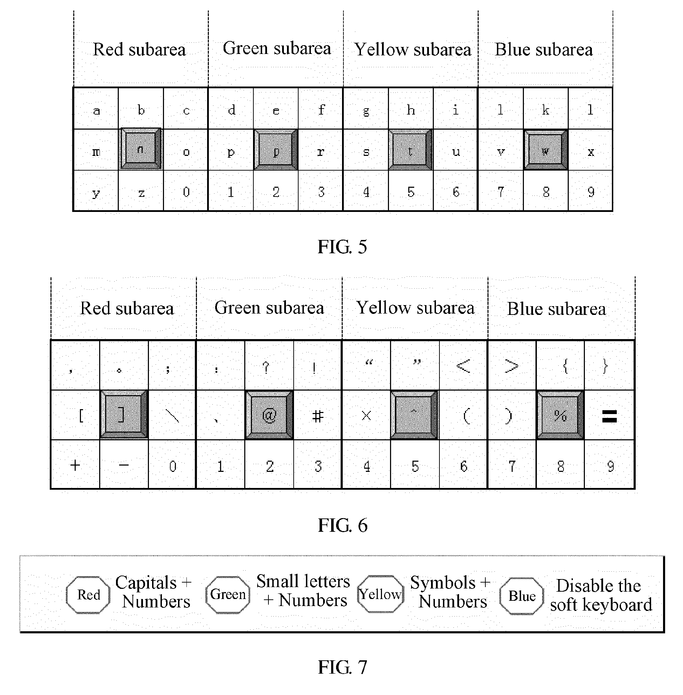

It can be seen from these drawings that, a character set included in the soft keyboard shown in FIG. 2 is capitals and numbers; a character set included in the soft keyboard shown in FIG. 5 is small letters and numbers; and a character set included in the soft keyboard shown in FIG. 6 is symbols and numbers.

The switch method of each soft keyboard is specifically as follows. When the user presses the switch function key on the remote controller, the indication shown in FIG. 7 appears on the screen. According to the indication of the soft keyboard on which the character to be input by the user is located. The user may switch to the desired soft keyboard by pressing the confirmation function key of the corresponding color on the remote controller.

For example, if the currently displayed soft keyboard does not include the character set of small letters, the user may press the switch function key on the remote controller; the indication shown in FIG. 7 is displayed on the screen; the user may learn that the soft keyboard including the character set of small letters corresponds to the green confirmation function key according to the indication; the user presses the green confirmation function key; and the soft keyboard shown in FIG. 5 is displayed on the screen.

It should be noted that, in step 201, the enabled soft keyboard is not limited to the soft keyboard shown in FIG. 2, and may also be the soft keyboard shown in FIG. 5 or FIG. 6 when necessary.

In addition, various methods for dividing the soft keyboard exist. In addition to the division according to different colors specifically provided in the embodiment, the soft keyboard may also be divided according to frames of different colors, or divided according to characters having different colors, which have the same idea, that is, dividing the soft keyboard by using different marks. Moreover, both the number of subareas in the soft keyboard and the number of the characters included in each subarea are not limited to the solutions in the embodiment, that is, four subareas are used, and 9 characters are indicated in each subarea. When necessary, the number of subareas and the number of characters included in each subarea may also be designed to be any other values. Since different layouts of the characters in the soft keyboard also influence the input speed, in addition to the soft keyboard having the layout of characters provided in the embodiment, another character layout capable of increasing the input speed may also appear in another embodiment of the present invention, and no matter what character arrangement sequence is used, any design concept of dividing the soft keyboard by using marks shall fall within the protection scope of the present invention.

The character input method in the prior art has the disadvantages of a low input speed and too many keys combined by the remote controller. Therefore, the character input by using the remote controller usually has the problem of low efficiency. In the input method provided in the embodiment, the focus may repeatedly move up, down, left and right within the region of the same color, so the focus at any position generally needs to be moved twice to reach a desired character. In this way, not only the character input efficiency is improved, but also the number of keys on the remote controller may be reduced, which facilitates reduction of the volume of the remote controller.

### Embodiment 3

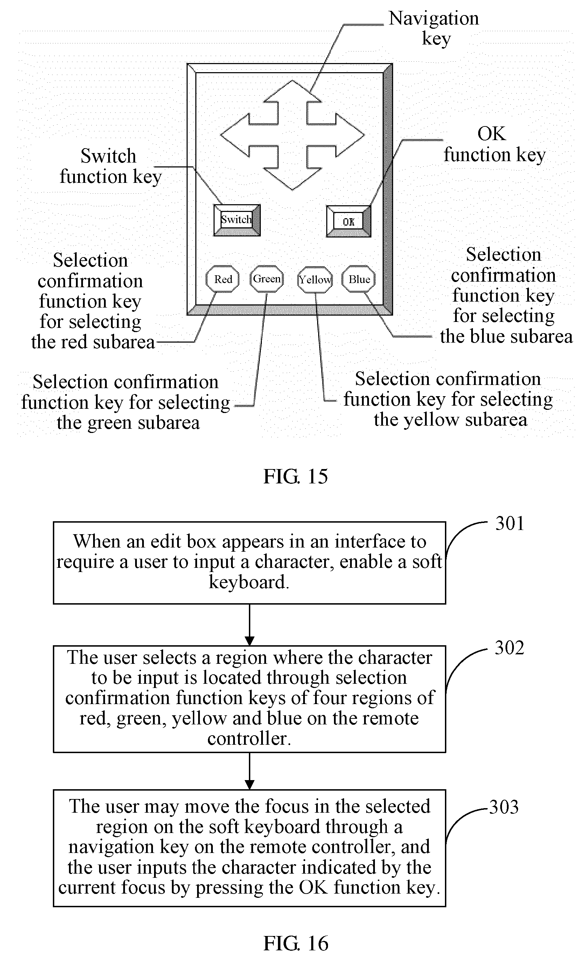

Embodiment 3 specifically provides a character input method. The method in the embodiment involves a soft keyboard and a remote controller. FIG. 2 shows a soft keyboard in the embodiment. The soft keyboard is divided into four subareas by using four different colors: red, green, yellow and blue. Each subarea includes a focus. FIG. 15 shows a remote controller in Embodiment 3. The remote controller includes: navigation keys of moving up, down, left and right for sending navigation signals; a switch function key for sending a switch signal; selection confirmation function keys of four regions of red, green, yellow and blue respectively corresponding to the four subareas of the soft keyboard for sending selection confirmation signals respectively corresponding to the four subareas; and an OK function key for sending a confirmation signal to input a character selected by a user.

As shown in FIG. 16, the method includes the following.

Step 301: When an edit box appears on an interface to require a user to input a character, enable a soft keyboard shown in FIG. 2.

Step 302: The user selects a region where the character to be input is located through selection confirmation function keys of four regions of red, green, yellow and blue on the remote controller.

For example, in the soft keyboard shown in FIG. 2, when the character A to be input by the user is in the red region, the user may select the red region by pressing the selection confirmation function key of red on the remote controller.

Step 303: The user may move the focus in the selected region on the soft keyboard through a navigation key on the remote controller, and when the focus is moved to the character to be input, the user inputs the character indicated by the current focus by pressing the OK function key.

For example, in the soft keyboard shown in FIG. 2, if the user needs to input the character "N", the focus may be moved in the red region according to the navigation key. When the character indicated by the focus is "N", the user may input "N" indicated by the focus in the red subarea by pressing the OK function key on the remote controller.

In addition, in the embodiment, according to the included character types, soft keyboard may also be divided into three types, which are respectively the soft keyboards shown in FIG. 2, FIG. 5 and FIG. 6.

It can be seem from these drawings that, a character set included in the soft keyboard shown in FIG. 2 is capitals and numbers; a character set included in the soft keyboard shown in FIG. 5 is small letters and numbers; and a character set included in the soft keyboard shown in FIG. 6 is symbols and numbers.

The switch method of each soft keyboard is specifically as follows. When the user presses the switch function key on the remote controller, the indication shown in FIG. 7 appears on the screen. According to the indication, the user may learn on which soft keyboard the character to be input is located. The user may switch to the desired soft keyboard by pressing the selection confirmation function key of the corresponding color on the remote controller.

For example, if the currently displayed soft keyboard does not include the character set of small letters, the user may press the switch function key on the remote controller; the indication shown in FIG. 7 is displayed on the screen; the user may learn according to the indication that the soft keyboard including the character set of small letters corresponds to the selection confirmation function key of green; the user presses the selection confirmation function key of green, and the soft keyboard shown in FIG. 5 is displayed on the screen.

It should be noted that in step 301, the enabled soft keyboard is not limited to the soft keyboard shown in FIG. 2, and may also be the soft keyboard shown in FIG. 5 or FIG. 6 when necessary.

The character input method in the prior art has the disadvantages of a low input speed and too many keys combined by the remote controller. Therefore, the character input by using the remote controller usually has the problem of low efficiency. In the input method provided in the embodiment, the focus may repeatedly move up, down, left and right within the region of the same color, so the focus at any position generally needs to be moved twice to reach a desired character. In this way, not only the character input efficiency is improved, but also the number of keys on the remote controller may be reduced, which facilitates reduction of the volume of the remote controller.

### Embodiment 4

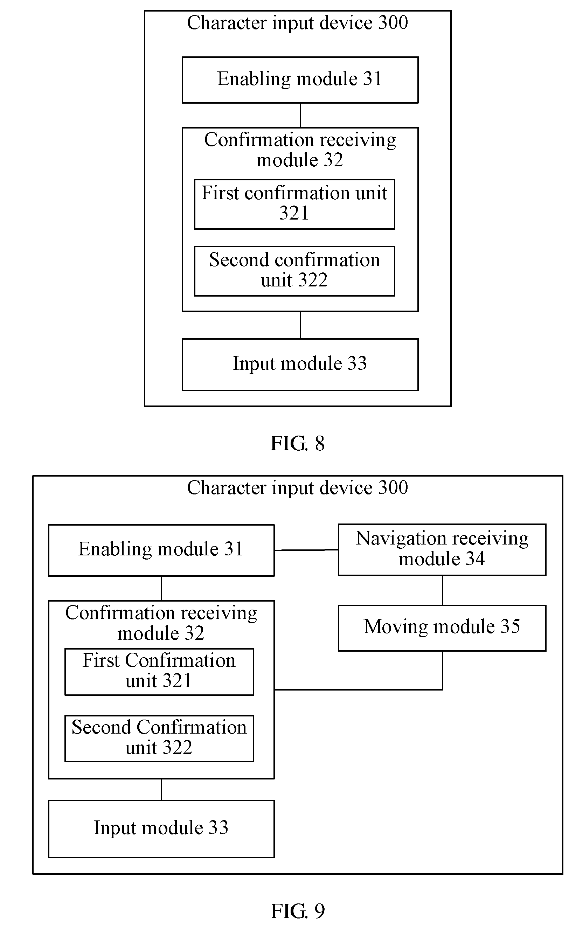

An embodiment provides a character input device 300. As shown in FIG. 8, the device includes an enabling module 31, a confirmation receiving module 32 and an input module 33.

The enabling module 31 is configured to enable a soft keyboard. The soft keyboard is divided into at least two subareas by using different marks, and each subarea has a focus. The confirmation receiving module 32 is configured to receive a confirmation signal. The input module 33 is configured to input a character indicated by the corresponding focus according to the confirmation signal received by the confirmation receiving module 32.

The confirmation receiving module 32 includes at least a confirmation unit 321 and a confirmation unit 322.

The first confirmation unit 321 is configured to receive a confirmation signal corresponding to a subarea, and the second confirmation unit 322 is also configured to receive a confirmation signal corresponding to a subarea, and different confirmation units correspond to different subareas. Other confirmation units have a similar function to that of the first confirmation unit 321, namely, for receiving a confirmation signal corresponding to a subarea.

In the embodiment, the input module 33 is further configured to input a character indicated by a focus in the corresponding subarea according to the confirmation signal received by the confirmation unit. The confirmation unit may be the first confirmation unit 321, or the second confirmation unit 322, or may also be other confirmation units.

The device 300 in the embodiment may further, as shown in FIG. 9, include the following optional modules: a navigation receiving module 34 and a moving module 35.

The navigation receiving module 34 is configured to receive a navigation signal. The moving module 35 is configured to move the focus in each subarea at the same time according to the navigation signal received by the navigation receiving module 34.

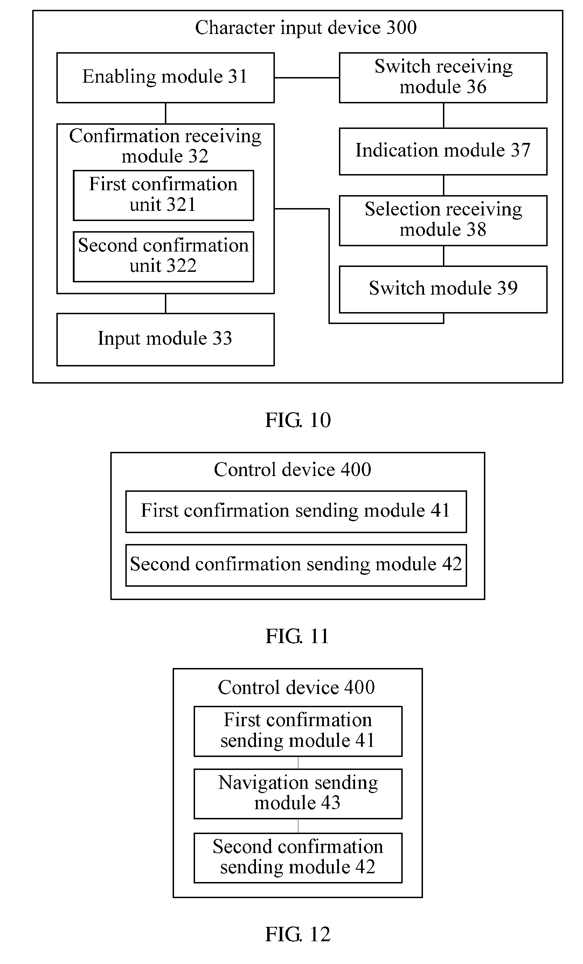

The device 300 in the embodiment may further, as shown in FIG. 10, include the following optional modules: a switch receiving module 36, an indication module 37, a selection receiving module 38 and a switch module 39.

The switch receiving module 36 is configured to receive a switch signal. The indication module 37 is configured to enable a switch indication. The switch indication includes the types of switchable soft keyboards. The selection receiving module 38 is configured to receive a selection signal. The switch module 39 is configured to switch to the corresponding soft keyboard according to the selection signal received by the selection receiving module 38.

It should be noted that, the modules in the character input device 300 provided in the embodiment of the present invention may be integrated or separately deployed. The modules may be combined into one module or may also be further divided into multiple submodules.

In addition, the confirmation receiving module 32 may further specifically include: a selection confirmation receiving unit, configured to receive a selection confirmation signal; a selection confirmation unit, configured to select a subarea corresponding to the selection confirmation signal as a subarea where the character to be input is located according to selection confirmation signal; a navigation receiving unit, configured to receive a navigation signal; a moving unit, configured to move, the focus in the subarea where the character to be input is located according to the navigation signal received by the navigation receiving module; and a confirmation receiving unit, configured to receive the confirmation signal. The subarea corresponding to the confirmation signal is the subarea corresponding to the selection confirmation signal.

In the character input device provided in the embodiment, the soft keyboard is divided into subareas, and each subarea has a focus, so multiple characters may be positioned at the same time, and the focus may repeatedly move up, down, left and right within the region of the same color, so the focus at any position generally needs to be moved twice to reach a desired character, so as to achieve the technical effect of improving the character input efficiency. In addition, the fabrication of the number keys is reduced in the embodiment of the present invention, thereby reducing the cost of the character input device.

The embodiment continues to provide a control device 400. As shown in FIG. 11, the control device 400 at least includes: a first confirmation sending module 41 and a second confirmation sending module 42.

The first confirmation sending module 41 is configured to send a confirmation signal. The confirmation signal corresponds to a subarea on a soft keyboard. The second confirmation sending module 42 is also configured to send a confirmation signal. The confirmation signal corresponds to another subarea on the soft keyboard.

If the control device 400 further includes other confirmation sending modules, any one of the other confirmation sending modules is also configured to send a confirmation signal, and the confirmation signals sent by different confirmation sending modules respectively correspond to different subareas on the soft keyboard.

The control device 400 in the embodiment may further, as shown in FIG. 12, include the following optional module: a navigation sending module 43.

The navigation sending module 43 is configured to send a navigation signal, so as to move the focus in each subarea on the soft keyboard at the same time according to the received navigation signal.

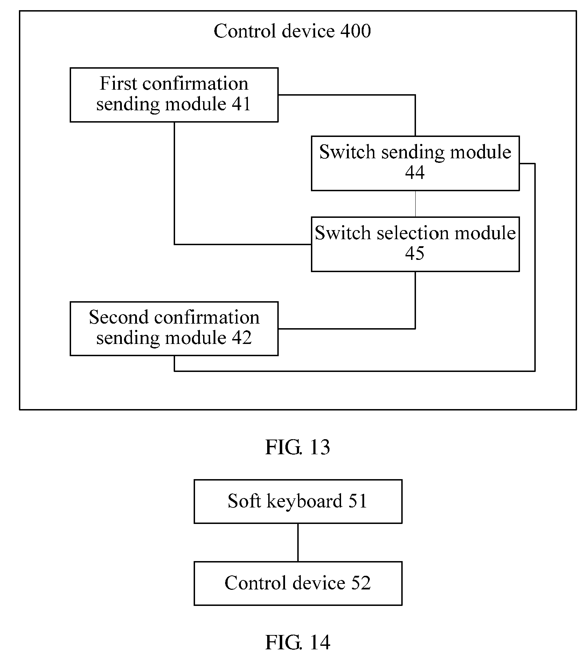

The control device 400 in the embodiment may further, as shown in FIG. 13, include the following optional modules: a switch sending module 44 and at least one switch selection module 45.

The switch sending module 44 is configured to send a switch signal. The switch selection module 45 is configured to send a selection signal. The selection signal corresponds to a soft keyboard. Each of the at least one switch selection module 45 is configured to send a selection signal. The selection signal respectively corresponds to a soft keyboard. The selection signals sent by different switch selection modules 45 correspond to different soft keyboards.

It should be noted that, during the implementation of the control device 400, the above modules may be integrated or separately deployed. For example, any confirmation sending module and switch selection module may be properly integrated, that is, implemented through a specific function key, so as to simplify the structure of the control device 400.

In addition, the confirmation sending module may specifically include: a selection confirmation sending unit, configured to send a selection confirmation signal, where each subarea corresponds to a selection confirmation signal; a navigation sending module, configured to send a navigation signal, so as to move the focus in the subarea corresponding to the selection confirmation signal on the soft keyboard according to the received navigation signal; and a confirmation sending unit, configured to send the confirmation signal. The subarea corresponding to the confirmation signal is the subarea corresponding to the selection confirmation signal.

Compared with the control device required to combine 10 number keys in the prior art, the control device provided in the embodiment does not need to use the number keys, so the number of the keys on the control device is reduced, which facilitates reduction of the volume of the remote controller, and part of the modules may be integrated and implemented through a function key, which help to simplify the structure of the remote controller.

### Embodiment 5

An embodiment provides a character input system 500. As shown in FIG. 14, the character input system 500 includes a soft keyboard 51 and a control device 52.

The soft keyboard 51 is configured to enable a soft keyboard, where the soft keyboard is divided into at least two subareas by using different marks, and each subarea has a focus; and after receiving a confirmation signal, input a character indicated by the corresponding focus according to the confirmation signal.

The control device 52 is configured to send at least two confirmation signals. Any one of the confirmation signals corresponds to a subarea on the soft keyboard, and different confirmation signals respectively correspond to different subareas on the soft keyboard.

Moreover, the control device 52 is further configured to send a navigation signal. Correspondingly, the soft keyboard 51 is further configured to receive the navigation signal, and move the focus in each subarea at the same time according to the received navigation signal.

The soft keyboard may be disposed in the character input device 300 in the above embodiment, and the control device 52 may be the control device 400 in the above embodiment. That is, the character input system 500 may include the character input device 300 and the control device 400 in the above embodiment.

The technical solution provided in the embodiment of the present invention has the following beneficial effects. The soft keyboard is divided into subareas by using different marks, and each subarea has a focus; the focus in each subarea may be moved at the same time; multiple characters may be positioned at one time, thereby alleviating the technical problems of redundant operations and low speed during character input, and achieving the technical effect of improving the character input efficiency. In addition, the fabrication of the number keys is reduced in the embodiment of the present invention, thereby reducing the cost of the character input device.

Through the above description of the embodiments, it is apparent to persons skilled in the art that the present invention may be accomplished by software on a necessary universal hardware platform, and definitely may also be accomplished by hardware, but in most cases, the present invention is preferably implemented through the former method. Based on this, the technical solution of the present invention or the part that makes contributions to the prior art may be substantially embodied in the form of a software product. The computer software product may be stored in a readable storage medium, for example, a floppy disk, hard disk or optical disk of the computer, and include several instructions used to instruct an equipment (such as a notebook computer) to perform the method according to the embodiments of the present invention.

It may be understood by persons of ordinary skill in the art that, all or a part of the processes of the methods according to the above embodiments may be implemented through a computer program instructing relevant hardware. The program may be stored in a computer readable storage medium, and when the program is run, the processes of the methods according to the above embodiments may be included in the program. The storage medium may be a magnetic disk, an optical disk, a read-only memory (Read-Only Memory, ROM) or a random access memory (Random Access Memory, RAM).

Finally, it should be noted that, the above embodiments are merely provided for describing the technical solutions of the present invention, but not intended to limit the present invention. It should be understood by persons of ordinary skill in the art that, although the present invention has been described in detail with reference to the exemplary embodiments, modifications or equivalent replacements may be made to the technical solutions of the present invention, and these modifications or equivalent replacements do not cause the modified technical solutions to depart from the spirit and scope of the technical solutions of the present invention.

## Claims

1. A character input method, comprising:
enabling a soft keyboard, wherein the soft keyboard is divided into at least two subareas by using different marks, and each subarea has a focus;
receiving a confirmation signal corresponding to one of the subareas; and
inputting a character indicated by a focus in the subarea corresponding to the confirmation signal according to the received confirmation signal.

2. The method according to claim 1, wherein each subarea corresponds to a confirmation signal.

3. The method according to claim 2, wherein before the receiving the confirmation signal corresponding to one of the subareas, the method further comprises:
receiving a navigation signal; and
moving the focus in each subarea at the same time according to the received navigation signal.

4. The method according to claim 1, wherein each subarea corresponds to a selection confirmation signal, and the receiving the confirmation signal corresponding to one of the subareas comprises:
receiving a selection confirmation signal, and selecting a subarea corresponding to the selection confirmation signal as a subarea wherein the character to be input is located;
receiving a navigation signal;
moving the focus in the subarea wherein the character to be input is located according to the received navigation signal; and
receiving the confirmation signal, wherein the subarea corresponding to the confirmation signal is the subarea corresponding to the selection confirmation signal.

5. The method according to claim 1, wherein the soft keyboard is at least divided, according to character types, into any one or a combination of:
a soft keyboard combining a character set of capitals;
a soft keyboard combining a character set of small letters; and
a soft keyboard combining a character set of symbols.

6. The method according to claim 5, wherein when the soft keyboard is divided into a combination of multiple soft keyboards according to the character types, each soft keyboard corresponds to a selection signal, and the method further comprises:
receiving a switch signal;
enabling a switch indication, wherein the switch indication comprises switchable soft keyboards;
receiving a selection signal; and
switching to a corresponding soft keyboard according to the received selection signal.

7. The method according to any one of claims 1 to 6, wherein the mark is any one of: a color, frame and shape.

8. An input device, comprising:
an enabling module, configured to enable a soft keyboard, wherein the soft keyboard is divided into at least two subareas by using different marks, and each subarea has a focus;
a confirmation receiving module, configured to receive a confirmation signal corresponding to one of the subareas; and
an input module, configured to input a character indicated by a focus in the subarea corresponding to the confirmation signal according to the confirmation signal received by the confirmation receiving module.

9. The device according to claim 8, wherein the confirmation receiving module comprises at least two confirmation units, and each of the at least two confirmation units is configured to receive a confirmation signal corresponding to a subarea.

10. The device according to claim 9, wherein the device further comprises:
a navigation receiving module, configured to receive a navigation signal; and
a moving module, configured to move the focus in each subarea at the same time according to the navigation signal received by the navigation receiving module.

11. The device according to claim 8, wherein the confirmation receiving module comprises:
a selection confirmation receiving unit, configured to receive a selection confirmation signal, wherein each subarea corresponds to a selection confirmation signal;
a selection confirmation unit, configured to select a subarea corresponding to the selection confirmation signal as a subarea wherein the character to be input is located according to the selection confirmation signal;
a navigation receiving unit, configured to receive a navigation signal;
a moving unit, configured to move the focus in the subarea wherein the character to be input is located according to the navigation signal received by the navigation receiving module; and
a confirmation receiving unit, configured to receive the confirmation signal, wherein the subarea corresponding to the confirmation signal is the subarea corresponding to the selection confirmation signal.

12. The device according to claim 8, wherein the device further comprises:
a switch receiving module, configured to receive a switch signal;
an indication module, configured to enable a switch indication, wherein the switch indication comprises switchable soft keyboards;
a selection receiving module, configured to receive a selection signal; and
a switch module, configured to switch to a corresponding soft keyboard according to the selection signal received by the selection receiving module.

13. A control device, comprising: at least two confirmation sending modules, wherein
each of the at least two confirmation sending modules is configured to send a confirmation signal, and the confirmation signal corresponds to a subarea on a soft keyboard; and
the confirmation signals sent by different confirmation sending modules respectively correspond to different subareas on the soft keyboard.

14. The device according to claim 13, wherein the device further comprises:
a navigation sending module, configured to send a navigation signal, so as to move the focus in each subarea on the soft keyboard at the same time according to the received navigation signal.

15. The device according to claim 13, wherein the device further comprises:
a switch sending module, configured to send a switch signal; and
at least one switch selection module, each configured to send a selection signal, wherein the selection signal corresponds to a soft keyboard, wherein
the selection signals sent by different switch selection modules correspond to different soft keyboards.

16. The device according to claim 13, wherein the confirmation sending module comprises:
a selection confirmation sending unit, configured to send a selection confirmation signal, wherein each subarea corresponds to a selection confirmation signal;
a navigation sending module, configured to send a navigation signal, so as to move the focus in the subarea corresponding to the selection confirmation signal on the soft keyboard according to the received navigation signal; and
a confirmation sending unit, configured to send the confirmation signal, wherein the subarea corresponding to the confirmation signal is the subarea corresponding to the selection confirmation signal.

17. A character input system, comprising:
an input device, configured to enable a soft keyboard, and after receiving a confirmation signal corresponding to one of subareas, input a character indicated by a focus in the subarea corresponding to the confirmation signal according to the confirmation signal, wherein the soft keyboard is divided into at least two subareas by using different marks, and each subarea has a focus; and
a control device, configured to send at least two confirmation signals, wherein any one of the confirmation signals corresponds to a subarea on the soft keyboard, and different confirmation signals respectively correspond to different subareas on the soft keyboard.

18. The system according to claim 17, wherein
the control device is further configured to send a navigation signal; and
the input device is further configured to receive the navigation signal, and move the focus in each subarea at the same time according to the received navigation signal.
